# EUROPEAN PATENT SPECIFICATION

(11) **EP 3 661 989 B1**
(45) Date of publication and mention of the grant of the patent: **07.09.2022**
(21) Application number: 18746469.8
(22) Date of filing: 10.07.2018
(51) Int. Cl.: C08G 18/76, B01J 13/16, C08G 18/32, C11D 3/39, C11D 17/00

(54) **ADDITIVE COMPOSITION AND METHOD**
ADDITIVZUSAMMENSETZUNG UND VERFAHREN
COMPOSITION ADDITIVE ET PROCÉDÉ

(30) Priority: 31.07.2017 US 201762539170 P
(43) Date of publication of application: 10.06.2020
(73) Proprietor: Dow Global Technologies LLC, Midland, MI 48674 (US)
(72) Inventor: ZHAO, Min, Audubon, PA 19403 (US); CHEN, Liang, Sewickley, PA 15143 (US); CHEN, Xue, Lake Jackson, TX 77566 (US)
(74) Representative: Boult Wade Tennant LLP
(86) International application number: PCT/US2018/041373
(87) International publication number: WO 2019/027634

(56) References cited:
- WO-A1-97/14308
- WO-A1-2008/091538
- WO-A1-2010/101821
- WO-A1-2013/066950
- WO-A1-2015/168593
- WO-A2-98/16621
- WO-A2-2012/109513
- US-A- 4 299 723
- US-A- 5 650 102

## Description

### BACKGROUND

There are many applications where encapsulating an active is desirable. For example, textiles, such as wearable fabrics, are typically washed by contacting the textiles with a detergent formulation that is a combination of detergent components and other optional actives, such as bleaching agents. For ease of use, many detergent formulation users prefer an all-in-one product that incorporates the detergents and optional actives into a single product. Further, many users prefer this product to be a liquid, as compared to a solid or granular product.

WO-A-98/16621 relates to a process for encapsulating a solid detergent component using an oil-in-water emulsion and forming a polymer film at the oil/water interface by condensation polymerization.

One common detergent active is tetraacetylethylenediamine (TAED). TAED functions as a peroxy bleaching activator and a microbial control agent. TAED has been extensively used in solid detergent products. TAED, in liquid detergent formulations which contain in part water, will undergo hydrolysis and lose effectiveness as a detergent active. As the TAED reacts to form N,N'-diacetylethylenediamine (DAED), which is not effective as a detergent active. As such, TAED, when used without modification, is not ideal as an active for an aqueous detergent formulation. Triacetylethylenediamine (TriAED) is another detergent active. An additive containing active that is suitable for use in formulations that contain water is desired.

### SUMMARY OF THE INVENTION

An additive consisting of an active, the active consisting of one or both of tetraacetylethylenediamine or triacetylethylenediamine; and the interfacial polymerization reaction product of a (poly)isocyanate and a polyamine.

A method of preparing a water dilution-responsive additive comprising providing an oil phase comprising an active, a solvent, a (poly)isocyanate; providing an aqueous phase comprising water and an emulsifier; mixing the oil phase and the aqueous phase to provide an emulsion; and providing a polyamine to the emulsion; wherein the active consists of one or both of tetraacetylethylenediamine or triacetylethylenediamine.

### DETAILED DESCRIPTION OF THE INVENTION

The present disclosure describes an improved additive for encapsulating an active. In one aspect, the present disclosure describes an additive emulsion comprising an active, wherein the active consists of one or both of, tetraacetylethylenediamine (TAED) or triacetylethylenediamine, and the interfacial polymerization reaction product of a (poly)isocyanate and a polyamine. The improvement of the additive described herein is increased hydrolytic stability for the active which gives enhanced long-term stability in an aqueous formulation. As used herein, "(poly)"isocyanate refers to either or both of a polymeric isocyanate or a monomeric isocyanate.

The (poly)isocyanate is selected from the group consisting of toluene diisocyanate, 4,4'-diphenylmethane diisocyanate, polymethylene polyphenyl isocyanate, isophorone diisocyanate, 1,4-diisocyanatobutane, 1,4-phenylene diisocyanate, 1,3-phenylene diisocyanate, hexamethylene diisocyanate, 1,3-bis(isocyanatomethyl)benzene, 1,8-diisocyanatooctane, 4,4'-methylenebis(phenyl isocyanate), and 4,4'-methylenebis(cyclohexyl isocyanate).

The polyamine is a water-soluble polyamine. The water-soluble polyamine is selected from the group consisting of ethylenediamine, diethylenetriamine, triethylenetretraamine, tetraethylenepentamine, and pentaethylenehexamine.

The (poly)isocyanate and the polyamine are reacted together in an interfacial polymerization reaction. The interfacial polymerization reaction involves a polymerization reaction at the interface between two phases, here an oil phase and an aqueous phase. The oil phase includes the active, the (poly)isocyanate and a solvent. The aqueous phase includes water and an emulsifier. The emulsifier is a nonionic surfactant. The non-ionic surfactant may be a polymeric surfactant of block or random copolymers. Nonionic surfactants include ethoxylated aliphatic or aromatic alcohols, castor-oil based ethoxylates, fatty acid ethoxylates, polyoxyethylene-polyoxypropylene block or random copolymers, sorbitan ester ethoxylates, polyethyleneglycol esters, and polyoxyethylene fatty acid amides. In one instance, the emulsifier is polyvinyl alcohol. Preferred surfactants are Croda's polymeric surfactants and dispersants available under the Atlas and Atlox, tradename. Most preferred is Atlox 4914 a random copolymer of an alkyd-PEG resin. The oil phase and the water phase are mixed to form an emulsion. The polyamine is added to the emulsion, wherein the polyamine and the (poly)isocyanate react via interfacial polymerization.

The solvent is selected from the groups of petroleum fractions or hydrocarbons such as mineral oil, aromatic solvents, xylene, toluene, and paraffinic oils; vegetable oils such as soy bean oil, rape seed oil, olive oil, castor oil, sunflower seed oil, coconut oil, corn oil, cotton seed oil, linseed oil, palm oil, peanut oil, safflower oil, sesame oil and tung oil; esters of the above vegetable oils; esters of monoalcohols or dihydric, trihydric, or other lower polyalcohols (4-6 hydroxy containing), such as 2-ethyl hexyl stearate, ethylhexyl benzoate, isopropyl benzoate, n-butyl oleate, isopropyl myristate, propylene glycol dioleate, di-octyl succinate, di-butyl adipate, di-octyl phthalate, acetyl tributyl citrate, triethylcitrate and triethyl phosphate; esters of mono-, di- and polycarboxylic acids, such as benzylacetate and ethylacetate; ketones, such as cyclohexanone, acetophenone, 2-heptanone, gamma-butyrolactone, isophorone, amides, such as N-ethyl pyrrolidone, and N-octyl pyrrolidone; alkyldimethylamides, such as dimethylamide of C8 and C10 acids and dimethylacetamide; alcohols of low water solubility such as benzyl alcohol, cresols, terpineols, tetrahydrofurfurylalcohol, 2-isopropylphenol, cyclohexanol and n-hexanol. Examples of solvents useful in the present application are Solvesso^{™} aromatic fluids available from ExxonMobil.

As described herein, the additive encapsulates, or partially encapsulates, the active. As used herein, "encapsulated" refers to the active being bound or retained within the copolymer network. As used herein, the "copolymer network" refers to the product of the interfacial polymerization reaction. The additives described herein are designed to release the active during a triggering event (in the context of the present disclosure, the triggering event might be use in a washing machine). When referring to the active being encapsulated, it refers to the active being retained within the copolymer network prior to the triggering event. The additives prepared according to the methods of the present disclosure have an encapsulating efficiency of 30 to 100 percent. Preferably, the additives prepared according to the methods of the present disclosure have an encapsulating efficiency of 60 to 100 percent. More preferably, the additives prepared according to the methods of the present disclosure have an encapsulating efficiency of 90 to 100 percent. As used herein, "encapsulating efficiency" refers to the percentage of prospective actives that are encapsulated in the copolymer network of the additive.

The additive described herein has a better long-term stability in aqueous systems than actives, such as TAED, alone. For example, when the additive is a detergent additive and is used in a washing machine the active is released from the copolymer, allowing the active to be available in the washing system to perform its detergent-enhancing functionality.

The methods described herein are suitable for preparing other types of additive systems. For example, the methods described herein can include encapsulating fabric softening agents, detergent actives, bleach actives, fertilizers, micronutrients, pesticides (fungicides, bactericides, insecticides, acaricides and nematocides), biocides, microbial control agents, polymeric lubricants, fire retardants, pigments, dyes, urea inhibitors, food additives, flavorings, pharmaceutical agents, tissues, antioxidants, cosmetic ingredients (fragrances and perfumes), soil amendments (soil repelling agents and soil release agents), catalysts, diagnostic agents and photoprotective agents (UV blockers).

The additives described herein have a dilution-response trigger. Wherein, the active encapsulated within the additive is released by the introduction of excess water. Without being limited by theory, it is expected that the introduction water causes the wall-like structure of the additive to swell, which causes the wall to either burst or form channels through which the active can be release from the additive.

### Examples

### Materials and Encapsulated Examples

- SolvessoTM 200 fluid, commercially available from Exxon Mobil, is characterized as a complex mixture of aromatic hydrocarbons obtained from distillation of aromatic streams derived from crude oil.
- AtloxTM 4914, commercially available from Croda, is a nonionic polymeric surfactant with a low HLB value of 6.
- PAPI 27, commercially available from the Dow Chemical Company, is a polymethylene polyphenylisocyanate that contains MDI. It has an average molecular weight of 340 and an isocyanate equivalent weight of 134.0, and NCO content by weight of 31.4%.
- Polyvinyl alcohol: Celvol 203 from Kuraray.
- TAED: commercially available from Sigma-Aldrich
- Ethylenediamine is obtained from The Dow Chemical Company.

### Experimental procedure

### Encapsulation by Interfacial Polymerization

Following the formulation in Table 1, the targeted surfactant Atlox 4914 and 10% TAED powder were added to the solvent Solvesso 200. The mixture was mixed vigorously via a vortex mixer to form a suspension of TAED. Polyisocyanate (PAPI 27) was then added and well mixed. The above mixture was used as the oil phase. The aqueous phase was prepared by adding polyvinyl alcohol to water to make a 4.5% solution.

The aqueous phase was poured to the top of oil phase and the mixture was emulsified via a Silverson L5 high shear mixer to generate emulsion.

Ethylenediamine in a water solution (30%) was then added and the mixture was allowed to stir at ambient temperature for at least 30 min.

**Table 1: Formulation 1**

| Component | Wt (g) | Wt % |
|---|---|---|
| Solvesso 200 | 12.62 | 35.7% |
| PAPI 27 | 0.73 | 2.1% |
| TAED | 1.50 | 4.2% |
| Atlox 4914 | 0.15 | 0.4% |
| EDA | 0.10 | 0.3% |
| Celvol 205 | 0.90 | 2.5% |
| Water | 19.33 | 54.7% |
| Total | 35.33 | 100.0% |

### Microscopy Evaluation

For the release mechanism of the active, the encapsulated material was placed in water. While using a Zeiss Axio Imager microscope it was observed that on dilution with water, the polyurea shell began to expand resulting in the outer shell breaking and releasing the oil phase containing the active (TAED).

### HPLC Method evaluation

1 droplet (ca. 0.1g) of the example formulation was added to 10g H₂O solvent and mixed for 1 minute and analyzed using HPLC. This analysis is labeled as test 1. To investigate the dilution trigger, for comparison, 1 droplet (ca. 0.1g) of the example formulation was added to 10g of H₂O with mixing for 20min, and analyzed using HPLC. This analysis is labeled as test 2. The concentration of TAED and DAED of the prepared samples were measured using Agilent 1100 High-Performance Liquid Chromatography (HPLC) with quaternary pump and diode array detector. The HPLC method conditions are summarized in the table below.

**Table 2: HPLC Testing Conditions**

| | | | |
|---|---|---|---|
| System | Agilent 1100 with quaternary pump and diode array detector | | |
| Column | Eclipse XDB-C18: 4.6 mm x 50 mm x 5 µm | | |
| Column Temperature | 40 °C | | |
| Injection Volume | 1 µL sample | | |
| Flow Rate | 1 mL/min | | |
| Mobile Phases | A = 18.2 MΩ-cm water, B = acetonitrile | | |
| Gradient | Time | Composition | |
| | (min) | %A | %B |
| | 0.0 | 65 | 35 |
| | 3.5 | 0 | 100 |
| | 5.5 | 0 | 100 |
| Equilibration Time | 2.5 min | | |
| Total Run Time | -10 | | |
| Detection | UV (DAD) @ 216 nm, BW 4 nm, 1 cm cell (TAED) | | |
| | UV (DAD) @ 205 nm, BW 4 nm, 1 cm cell (DAED) | | |

The results are shown in Table 3. Based on Test 1 which does not involve the water dilution process, the DAED concentration is 0%, indicating good encapsulation, while for Test 2 involves mixing the encapsulated material in water for 20 minutes, the DAED concentration is 0.0244%. The DAED is formed as a result of the hydroloysis of TAED released from the encapsulated material. The HPLC analysis of these materials is consistent with the shell breaking phenomena detected by microscopy.

**Table 3: HPLC results of Formulation 1 before and after dilution**

| | DAED | TAED |
|---|---|---|
| sample ID | concentration % | concentration % |
| Test 1 | 0 | 0.663 |
| Test 2 | 0.0244 | 0.715 |

## Claims

1. An additive consisting of:
an active, the active consisting of one or both of tetraacetylethylenediamine or triacetylethylenediamine; and
the interfacial polymerization reaction product of a (poly)isocyanate and a polyamine.

2. The additive of claim 1, wherein the (poly)isocyanate is selected from the group consisting of toluene diisocyanate, 4,4'-diphenylmethane diisocyanate, polymethylene polyphenyl isocyanate, isophorone diisocyanate, 1,4-diisocyanatobutane, 1,4-phenylene diisocyanate, 1,3-phenylene diisocyanate, hexamethylene diisocyanate, 1,3-bis(isocyanatomethyl)benzene, 1,8-diisocyanatooctane, 4,4'-methylenebis(phenyl isocyanate), and 4,4'-methylenebis(cyclohexyl isocyanate).

3. The additive of claim 1, wherein the polyamine is a water-soluble polyamine.

4. The additive of claim 3, wherein the water-soluble polyamine is selected from the group consisting of ethylenediamine, diethylenetriamine, triethylenetretraamine, tetraethylenepentamine, and pentaethylenehexamine.

5. The additive of any one of claims 1 to 4, wherein the encapsulating efficiency of the active in the additive is from 60 to 100 percent.

6. A method of preparing a water dilution-responsive additive comprising:
providing an oil phase comprising an active, a solvent, a (poly)isocyanate;
providing an aqueous phase comprising water and an emulsifier;
mixing the oil phase and the aqueous phase to provide an emulsion; and
providing a polyamine to the emulsion;
wherein the active consists of one or both of tetraacetylethylenediamine or triacetylethylenediamine.

7. The method of claim 6, wherein the (poly)isocyanate is selected from the group consisting of toluene diisocyanate, 4,4'-diphenylmethane diisocyanate, polymethylene polyphenyl isocyanate, isophorone diisocyanate, 1,4-diisocyanatobutane, 1,4-phenylene diisocyanate, 1,3-phenylene diisocyanate, hexamethylene diisocyanate, 1,3-bis(isocyanatomethyl)benzene, 1,8-diisocyanatooctane, 4,4'-methylenebis(phenyl isocyanate), and 4,4'-methylenebis(cyclohexyl isocyanate).

8. The method of claim 6, wherein the polyamine is selected from the group consisting of ethylenediamine, diethylenetriamine, triethylenetretraamine, tetraethylenepentamine, and pentaethylenehexamine.

9. The method of claim 6, wherein the solvent has a water solubility of 10 grams per 100 milliliters or less.

10. The method of claim 6, wherein the solvent is selected from the groups of petroleum fractions or hydrocarbons such as mineral oil, aromatic solvents, xylene, toluene, and paraffinic oils; vegetable oils such as soy bean oil, rape seed oil, olive oil, castor oil, sunflower seed oil, coconut oil, corn oil, cotton seed oil, linseed oil, palm oil, peanut oil, safflower oil, sesame oil, and tung oil; esters of the above vegetable oils; esters of monoalcohols or dihydric, trihydric, or other lower polyalcohols (4-6 hydroxy containing), such as 2-ethyl hexyl stearate, ethylhexyl benzoate, isopropyl benzoate, n-butyl oleate, isopropyl myristate, propylene glycol dioleate, di-octyl succinate, di-butyl adipate, di-octyl phthalate, acetyl tributyl citrate, triethylcitrate, and triethyl phosphate; esters of mono-, di- and polycarboxylic acids, such as benzylacetate, and ethylacetate; ketones, such as cyclohexanone, acetophenone, 2-heptanone, gamma-butyrolactone, isophorone, N-ethyl pyrrolidone, and N-octyl pyrrolidone; alkyldimethylamides, such as dimethylamide of C8 and C10, and dimethylacetamide; alcohols of low water solubility such as benzyl alcohol, cresols, terpineols, tetrahydrofurfurylalcohol, 2-isopropylphenol, cyclohexanol, and n-hexanol.

## Patentansprüche

1. Additiv, bestehend aus:
einem Wirkstoff, wobei der Wirkstoff aus einem oder beiden von Tetraacetylethylendiamin oder Triacetylethylendiamin besteht; und
dem Grenzflächenpolymerisationsreaktionsprodukt eines (Poly)isocyanats und eines Polyamins.

2. Additiv nach Anspruch 1, wobei das (Poly)isocyanat ausgewählt ist aus der Gruppe bestehend aus Toluoldiisocyanat, 4,4'-Diphenylmethandiisocyanat, Polymethylenpolyphenylisocyanat, Isophorondiisocyanat, 1,4-Diisocyanatobutan, 1,4-Phenylendiisocyanat, 1,3-Phenylendiisocyanat, Hexamethylendiisocyanat, 1,3-Bis(isocyanatomethyl)benzol, 1,8- Diisocyanatooctan, 4,4'-Methylenbis(phenylisocyanat) und 4,4'-Methylenbis(cyclohexylisocyanat).

3. Additiv nach Anspruch 1, wobei das Polyamin ein wasserlösliches Polyamin ist.

4. Additiv nach Anspruch 3, wobei das wasserlösliche Polyamin ausgewählt ist aus der Gruppe bestehend aus Ethylendiamin, Diethylentriamin, Triethylentretraamin, Tetraethylenpentamin und Pentaethylenhexamin.

5. Additiv nach einem der Ansprüche 1 bis 4, wobei die Verkapselungseffizienz des Wirkstoffs in dem Additiv von 60 bis 100 Prozent beträgt.

6. Verfahren zum Herstellen eines auf Wasserverdünnung reagierenden Additivs, umfassend: Bereitstellen einer Ölphase, umfassend einen Wirkstoff, ein Lösungsmittel, ein (Poly)isocyanat; Bereitstellen einer wässrigen Phase, die Wasser und einen Emulgator umfasst; Mischen der Ölphase und der wässrigen Phase, um eine Emulsion bereitzustellen; und Bereitstellen eines Polyamins für die Emulsion;
wobei der Wirkstoff aus einem oder beiden von Tetraacetylethylendiamin oder Triacetylethylendiamin besteht.

7. Verfahren nach Anspruch 6, wobei das (Poly)isocyanat ausgewählt ist aus der Gruppe bestehend aus Toluoldiisocyanat, 4,4'-Diphenylmethandiisocyanat, Polymethylenpolyphenylisocyanat, Isophorondiisocyanat, 1,4-Diisocyanatobutan, 1,4-Phenylendiisocyanat, 1,3-Phenylendiisocyanat, Hexamethylendiisocyanat, 1,3-Bis(isocyanatomethyl)benzol, 1,8-Diisocyanatooctan, 4,4'-Methylenbis(phenylisocyanat) und 4,4'-Methylenbis(cyclohexylisocyanat).

8. Verfahren nach Anspruch 6, wobei das Polyamin ausgewählt ist aus der Gruppe bestehend aus Ethylendiamin, Diethylentriamin, Triethylentretraamin, Tetraethylenpentamin und Pentaethylenhexamin.

9. Verfahren nach Anspruch 6, wobei das Lösungsmittel eine Wasserlöslichkeit von 10 Gramm pro 100 Milliliter oder weniger aufweist.

10. Verfahren nach Anspruch 6, wobei das Lösungsmittel ausgewählt ist aus den Gruppen von Erdölfraktionen oder Kohlenwasserstoffen, wie Mineralöl, aromatischen Lösungsmitteln, Xylol, Toluol und Paraffinölen; Pflanzenölen, wie Sojabohnenöl, Rapsöl, Olivenöl, Rizinusöl, Sonnenblumenöl, Kokosnussöl, Maisöl, Baumwollsamenöl, Leinöl, Palmöl, Erdnussöl, Safloröl, Sesamöl und Tungöl; Estern der vorstehenden Pflanzenöle; Estern von Monoalkoholen oder zweiwertigen, dreiwertigen oder anderen niederen Polyalkoholen (4-6-Hydroxy enthaltenden), wie 2-Ethylhexylstearat, Ethylhexylbenzoat, Isopropylbenzoat, n-Butyloleat, Isopropylmyristat, Propylenglycoldioleat, Dioctylsuccinat, Dibutyladipat, Dioctylphthalat, Acetyltributylcitrat, Triethylcitrat und Triethylphosphat; Estern von Mono-, Di- und Polycarbonsäuren, wie
Benzylacetat und Ethylacetat; Ketonen, wie Cyclohexanon, Acetophenon, 2-Heptanon, gamma-Butyrolacton, Isophoron, N-Ethylpyrrolidon und N-Octylpyrrolidon; Alkyldimethylamiden, wie Dimethylamid von C8 und C10 und Dimethylacetamid; Alkoholen mit niedriger Wasserlöslichkeit, wie Benzylalkohol, Cresolen, Terpineolen, Tetrahydrofurfurylalkohol, 2-Isopropylphenol, Cyclohexanol und n-Hexanol.

## Revendications

1. Additif constitué de :
un actif, l'actif constitué de l'une et/ou l'autre parmi tétraacétyléthylènediamine ou triacétyléthylènediamine ; et
le produit de réaction de polymérisation interfaciale d'un (poly)isocyanate et d'une polyamine.

2. Additif selon la revendication 1, dans lequel le (poly)isocyanate est choisi dans le groupe constitué de diisocyanate de toluène, diisocyanate de 4,4'-diphénylméthane, isocyanate de polyméthylène polyphényle, diisocyanate d'isophorone, 1,4-diisocyanatobutane, diisocyanate de 1,4-phénylène, diisocyanate de 1,3-phénylène, diisocyanate d'hexaméthylène, 1,3-bis(isocyanatométhyl)benzène, 1,8-diisocyanatooctane, 4,4'-méthylènebis(isocyanate de phényle), et 4,4'-méthylènebis(isocyanate de cyclohexyle).

3. Additif selon la revendication 1, dans lequel la polyamine est une polyamine hydrosoluble.

4. Additif selon la revendication 3, dans lequel la polyamine hydrosoluble est choisie dans le groupe constitué d'éthylènediamine, diéthylènetriamine, triéthylènetétraamine, tétraéthylènepentamine, et pentaéthylènehexamine.

5. Additif selon l'une quelconque des revendications 1 à 4, dans lequel le rendement d'encapsulation de l'actif dans l'additif va de 60 à 100 pour cent.

6. Procédé de préparation d'un additif répondant à une dilution dans l'eau comprenant :la fourniture d'une phase huileuse comprenant un actif, un solvant, un (poly)isocyanate ; la fourniture d'une phase aqueuse comprenant de l'eau et un émulsifiant ; le mélange de la phase huileuse et de la phase aqueuse pour fournir une émulsion ; et la fourniture d'une polyamine à l'émulsion ;
dans lequel l'actif est constitué de l'une et/ou l'autre parmi tétraacétyléthylènediamine ou triacétyléthylènediamine.

7. Procédé selon la revendication 6, dans lequel le (poly)isocyanate est choisi dans le groupe constitué de diisocyanate de toluène, diisocyanate de 4,4'-diphénylméthane, isocyanate de polyméthylène polyphényle, diisocyanate d'isophorone, 1,4-diisocyanatobutane, diisocyanate de 1,4-phénylène, diisocyanate de 1,3-phénylène, diisocyanate d'hexaméthylène, 1,3-bis(isocyanatométhyl)benzène, 1,8-diisocyanatooctane, 4,4'-méthylènebis(isocyanate de phényle), et 4,4'-méthylènebis(isocyanate de cyclohexyle).

8. Procédé selon la revendication 6, dans lequel la polyamine est choisie dans le groupe constitué d'éthylènediamine, diéthylènetriamine, triéthylènetétramine, tétraéthylènepentamine, et pentaéthylènehexamine.

9. Procédé selon la revendication 6, dans lequel le solvant a une solubilité dans l'eau de 10 grammes pour 100 millilitres ou moins.

10. Procédé selon la revendication 6, dans lequel le solvant est choisi dans les groupes de fractions de pétrole ou hydrocarbures tels qu'huile minérale, solvants aromatiques, xylène, toluène, et huiles paraffiniques ; huiles végétales telles qu'huile de soja, huile de graines de colza, huile d'olive, huile de ricin, huile de tournesol, huile de coco, huile de maïs, huile de graines de coton, huile de lin, huile de palme, huile d'arachide, huile de carthame, huile de sésame, et huile de tung ; esters des huiles végétales ci-dessus ; esters de monoalcools ou de polyalcools dihydriques, trihydriques, ou autres polyalcools inférieurs (contenant du 4-6 hydroxy), tels que stéarate de 2-éthyl-hexyle, benzoate d'éthylhexyle, benzoate d'isopropyle, oléate de n-butyle, myristate d'isopropyle, dioléate de propylène glycol, succinate de di-octyle, adipate de di-butyle, phtalate de di-octyle, citrate d'acétyl-tributyle, citrate de triéthyle, et phosphate de triéthyle ; esters d'acides mono-, di- et poly-carboxyliques, tels que
acétate de benzyle, et acétate d'éthyle ; cétones, telles que cyclohexanone, acétophénone, 2-heptanone, gamma-butyrolactone, isophorone, N-éthyl pyrrolidone, et N-octyl pyrrolidone ; alkyldiméthylamides, tels que diméthylamide de C8 et C10, et dimethylacétamide ; alcools de plus faible solubilité dans l'eau tels qu'alcool benzylique, crésols, terpinéols, alcool tétrahydrofurfurylique, 2-isopropylphénol, cyclohexanol, et n-hexanol.
